# FASCICULE DE BREVET EUROPEEN

(11) **EP 3 012 164 B1**
(45) Date de publication et mention de la délivrance du brevet: **07.08.2019**
(21) Numéro de dépôt: 15188074.7
(22) Date de dépôt: 02.10.2015
(51) Int. Cl.: B60S 1/52, B60S 1/38

(54) **SYSTÈME D ESSUYAGE POUR SURFACE VITRÉE DE VÉHICULE ET PROCÉDÉ DE FABRICATION**
WISCHERSYSTEM FÜR GLASFLÄCHE EINES FAHRZEUGS, UND HERSTELLUNGSVERFAHREN
WIPING SYSTEM FOR GLAZED VEHICLE SURFACE AND METHOD FOR MANUFACTURING THE SAME

(30) Priorité: 24.10.2014 FR 1460233
(43) Date de publication de la demande: 27.04.2016
(73) Titulaire: Valeo Systèmes d'Essuyage, 78322 Le Mesnil Saint Denis (FR)
(72) Inventeur: Barret, Guillaume, 63270 LAPS (FR); Thebault, Denis, 63000 Clermont Ferrand (FR)
(74) Mandataire: Vincent, Catherine Marie Marguerite

(56) Documents cités:
- WO-A1-2014/019627
- DE-A1-102008 042 405
- DE-U1-202010 005 214
- US-A1- 2006 265 830

## Description

L'invention concerne un système d'essuyage pour surface vitrée de véhicule. L'invention concerne également un procédé de fabrication d'un tel système d'essuyage.

Les véhicules automobiles sont couramment équipés de système d'essuie-glace pour assurer un balayage et un lavage du pare-brise et éviter que la vision qu'a le conducteur de son environnement ne soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée FlatBlade ® (pour "lame plate"), d'un ensemble semi-rigide qui maintient la lame racleuse sur toute sa longueur.

Dans cette seconde solution, le balai est rattaché au bras tournant de l'essuie-glace par un connecteur mécanique.

Certaines lames d'essuyage sont de plus munies d'au moins une rampe de projection de liquide de lavage, s'étendant dans certains cas continument le long de l'axe longitudinal de la lame d'essuyage. Le connecteur mécanique surmontant la lame d'essuyage interrompt donc la rampe de projection. Ceci forme un inconvénient majeur puisqu'une bande du pare-brise située au niveau du connecteur mécanique n'est pas aspergée par le fluide de lavage. US-A-2006/0265830 montre le préambule de la revendication 1.

La présente invention vise à proposer un système d'essuyage qui résolve au moins en partie l'inconvénient mentionné.

A cet effet, la présente invention a pour objet un système d'essuyage pour surface vitrée de véhicule comportant :
- un balai d'essuyage ayant une lame d'essuyage pourvue d'au moins un canal dans lequel est destiné à circuler un fluide de lavage, ledit canal s'étendant le long de l'axe longitudinal de la lame d'essuyage et débouchant latéralement de la lame d'essuyage par au moins un orifice de projection, et
- un connecteur relié au balai d'essuyage et destiné à être relié à un bras d'essuyage d'un véhicule,
caractérisé en ce que le connecteur présente au moins une ouverture ménagée en regard d'au moins un orifice de projection de la lame d'essuyage.

Grâce à l'ouverture ménagée en regard de l'orifice de projection, le connecteur ne couvre pas la lame d'essuyage au niveau de l'orifice de projection. Il est ainsi possible de percer tous les orifices de projection dans la lame d'essuyage par la même opération, de manière continue, avec les mêmes paramètres de réglage, d'une extrémité à l'autre de la lame d'essuyage.

Selon une ou plusieurs caractéristiques du système d'essuyage prise seule ou en combinaison,
- l'ouverture est ménagée au milieu de la dimension longitudinale d'une face latérale du connecteur,
- la lame d'essuyage est pourvue d'orifices de projection ménagés en quinconce de part et d'autre de l'axe longitudinal du balai et une unique ouverture est ménagée dans le connecteur en regard d'un unique orifice de projection de la lame d'essuyage ménagé dans la zone de la lame d'essuyage surmontée par le connecteur,
- l'ouverture est ménagée dans un bras d'une embase du connecteur reliant le balai d'essuyage,
- une portion de paroi de l'ouverture, située du côté de la lèvre de la lame d'essuyage, est inclinée par rapport à la direction normale à l'axe longitudinal de la lame d'essuyage,
- la portion de paroi inclinée forme un angle compris entre 50° et 60° avec la direction normale à l'axe longitudinal de la lame d'essuyage,
- l'orifice de projection est formé d'un trou d'axe incliné par rapport à la direction normale à l'axe longitudinal de la lame d'essuyage,
- l'axe du trou de l'orifice de projection est sensiblement parallèle à l'inclinaison de la portion de paroi inclinée,
- l'ouverture présente une forme sensiblement rectangulaire ou ovale ou ronde.

L'invention a aussi pour objet un procédé de fabrication d'un système d'essuyage tel que décrit précédemment, caractérisé en ce qu'on monte le connecteur sur la lame d'essuyage, puis on perce des orifices de projection le long de la lame d'essuyage.

D'autres caractéristiques et avantages de l'invention ressortiront de la description suivante, donnée à titre d'exemple, sans caractère limitatif, en regard des dessins annexés sur lesquels :
- la figure 1 montre un premier exemple de système d'essuyage,
- la figure 2 montre une vue agrandie d'un détail du système d'essuyage de la figure 1, vue de côté,
- la figure 3 montre une vue de face d'une lame d'essuyage du système d'essuyage de la figure 1,
- la figure 4 montre une vue de profil de la lame d'essuyage de la figure 3,
- la figure 5 est une vue schématique du balai d'essuyage illustrant l'agencement en quinconce des orifices de projection sur la lame d'essuyage,
- la figure 6 montre une vue en perspective du connecteur du système d'essuyage de la figure 1, et
- la figure 7 montre un deuxième exemple de système d'essuyage.

Sur ces figures, les éléments identiques portent les mêmes numéros de référence.

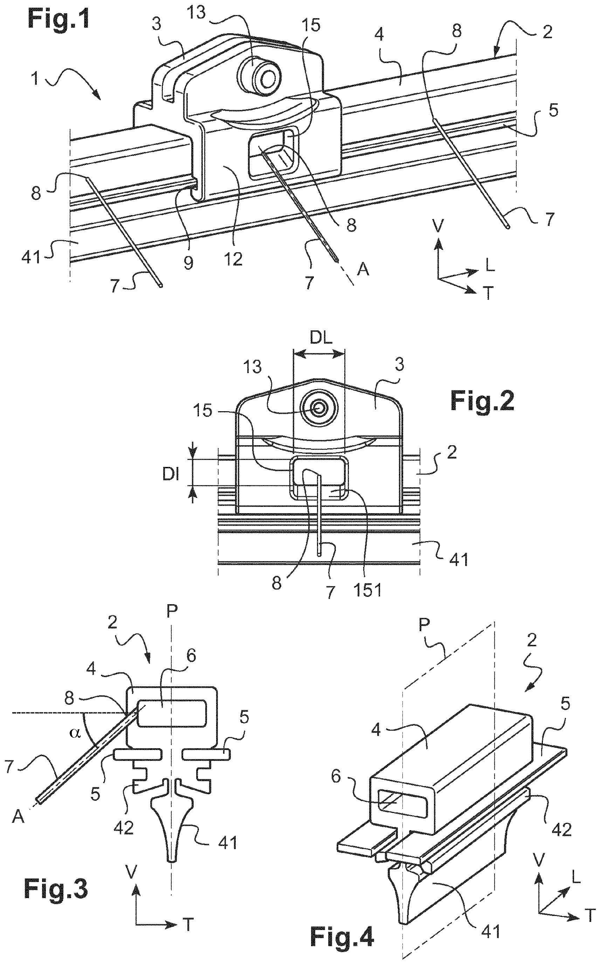

Dans la suite de la description, on adoptera à titre non limitatif des directions longitudinale, verticale et transversale indiquées sur la figure 1 par le trièdre (L, V, T) fixe par rapport au système d'essuyage 1. La direction longitudinale L correspond à la direction principale de la lame d'essuyage. La direction transversale T et la direction verticale V sont perpendiculaires entre elles et à la direction longitudinale L.

Les figures 1 et 2 représentent un système d'essuyage 1 pour surface vitrée de véhicule, telle que la vitre arrière.

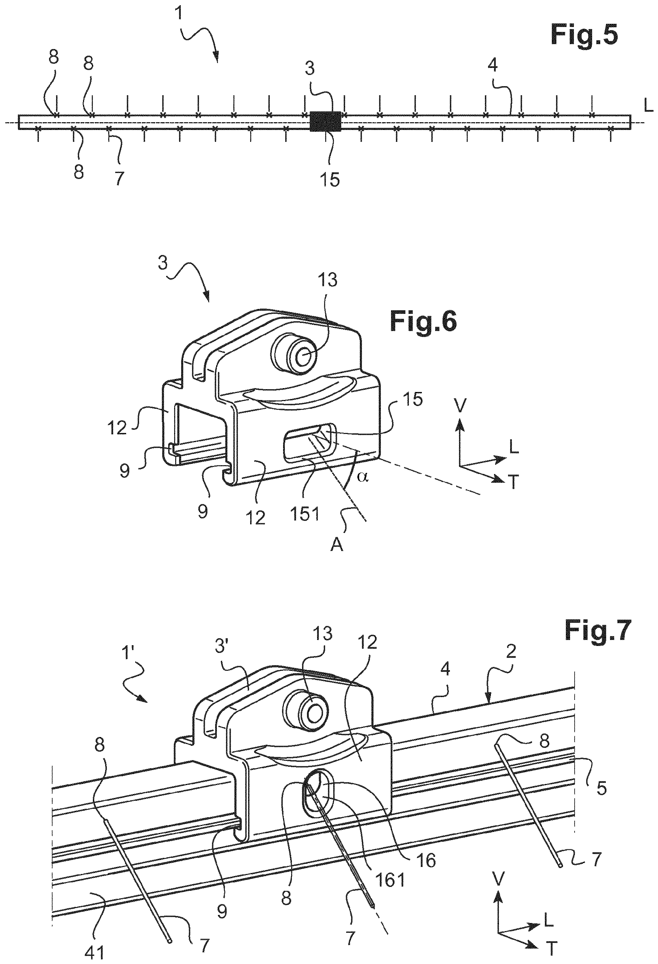

Le système d'essuyage 1 comporte un balai d'essuyage 2 et un connecteur 3. Le balai d'essuie-glace 2 comporte une lame d'essuyage 4 et une structure flexible 5. La lame d'essuyage 4 s'étend dans la direction longitudinale L. Le connecteur 3 est relié à la lame d'essuyage 4 au centre de la lame 4 (figure 5). La lame d'essuyage 4 et le connecteur 3 présentent un plan de symétrie longitudinal P.

Ainsi qu'on peut le voir plus clairement sur les figures 3 et 4, la lame d'essuyage 4 comporte une lèvre 41 destinée à racler une surface vitrée, ainsi qu'un talon 42 (ou amortisseur) formant interface entre la lèvre 41 et la structure flexible 5. De par leurs fonctions respectives, la lèvre 41 est particulièrement dure et résistante à l'usure, tandis que le talon 42 offre la souplesse nécessaire au retournement optimal de la lame 4, lors des inversions de sens de balayage, la souplesse résultant notamment du découpage particulier du talon 42.

La lame 4 est ainsi formée d'un profil par exemple en élastomère qui regroupe en un ensemble monobloc, à la fois la lèvre 41 et le talon 42. Au repos, la lame d'essuyage 4 présente un plan de symétrie longitudinale P.

La structure flexible 5 comporte deux languettes élastiquement déformables qui sont intégrées longitudinalement, respectivement au niveau des faces latérales opposées de la lame 4. Chaque languette, appelée communément vertèbre, est chargée de répartir la pression d'appui de façon homogène sur toute la longueur de la lame 4 dans le but d'optimiser la qualité d'essuyage. Elles sont par exemple métalliques. Selon un exemple de réalisation, la lame d'essuyage 4 est pourvue de deux fentes ouvertes longitudinalement et latéralement, recevant une vertèbre respective.

Le balai 2 comporte également des embouts d'extrémités (non représentés), par exemple enfilés sur les extrémités longitudinales de la lame d'essuyage 4, connectant mécaniquement entre eux la lame 4 avec les vertèbres de la structure flexible 5, en les pinçant.

La lame d'essuyage 4 est en outre pourvue d'au moins un canal 6 dans lequel un fluide de lavage 7 est destiné à circuler. Le canal 6 est ménagé dans le talon 42 de la lame d'essuyage 4. Il s'étend le long de l'axe longitudinal L de la lame d'essuyage 4 et débouche latéralement de la lame d'essuyage 4 par au moins un orifice de projection 8.

La section transversale du canal 6 est par exemple sensiblement rectangulaire.

Le canal 6 est destiné à être alimenté en fluide de lavage 7 à une extrémité de la lame d'essuyage 4 à travers l'embout d'extrémité.

Selon un exemple de réalisation, le canal 6 débouche de la lame d'essuyage par une pluralité d'orifices de projection 8. Les orifices de projection 8 sont par exemple répartis le long de l'axe longitudinal L, formant ainsi une rampe d'arrosage. L'espacement entre les orifices de projection 8 est par exemple constant.

On peut prévoir en outre qu'au moins un orifice de projection 8 soit ménagé de part et d'autre de l'axe longitudinal L du balai 2, pour projeter le fluide de lavage 7 respectivement de part et d'autre de l'axe L, par exemple pour que le fluide de lavage 7 ne soit projeté qu'à l'avant de la lame d'essuyage 4 au cours des phases montantes et descendantes du balayage.

Les orifices de projection 8 sont par exemple agencés en quinconce sur la lame d'essuyage 4 (figure 5).

Le connecteur 3 est relié d'une part, à la lame d'essuyage 4 et d'autre part, à un bras d'essuyage d'un véhicule (non représenté) pour son entrainement en pivotement.

Plus précisément, le connecteur 3 est solidarisé à la lame d'essuyage 2. Pour cela, l'embase du connecteur 3 comporte par exemple au moins une saignée 9, par exemple deux, opposées l'une à l'autre, et ménagées dans un bras 12 respectif du connecteur 3 délimitant l'embase. Les bras 12 s'étendent dans la direction verticale V. Les saignées 9 forment ainsi des crochets, présentant une forme correspondante à la partie du talon 42 dans laquelle est ménagé le canal 6. Les crochets sont ainsi aptes à venir en prise sur le balai 2, et plus particulièrement sur les vertèbres de la structure flexible 5 du balai 2 (figures 1 et 5). A l'état assemblé, le connecteur 3 surmonte ainsi la lame d'essuyage 2.

Le connecteur 3 est également destiné à être relié mécaniquement au bras d'essuyage, par exemple via un adaptateur, par exemple par liaison pivot. Pour cela, le connecteur 3 comporte par exemple un ou deux pions alignés 13, surmontant l'embase. Les pions 13, cylindriques, font saillie dans la direction transversale, pour coopérer en pivotement avec le bras d'actionnement ou un adaptateur de ce dernier. Le connecteur 3 permet ainsi de relier mécaniquement le bras à un balai 3 de type plat, la liaison pivot permettant de mettre en oeuvre une rotation du balai 3 par rapport au bras.

Le connecteur 3 présente en outre au moins une ouverture 15 ménagée en regard d'au moins un orifice de projection 8 de la lame d'essuyage 4.

Le connecteur 3 décrit ci-dessus est avantageusement réalisé en une seule pièce, par exemple obtenue par moulage.

Au cours de la fabrication, on monte le connecteur 3 sur la lame d'essuyage 4.

Puis, on perce, par exemple par laser, des orifices de projection 8 le long de la lame d'essuyage 4.

Grâce à l'ouverture 15 ménagée en regard de l'orifice de projection 8, le connecteur 3 ne couvre pas la lame d'essuyage 4 au niveau de l'orifice de projection 8. Il est ainsi possible de percer tous les orifices de projection 8 dans la lame d'essuyage 4 par la même opération, de manière continue, avec les mêmes paramètres de réglage, d'une extrémité à l'autre de la lame d'essuyage 4.

L'ouverture 15 est par exemple ménagée au milieu de la dimension longitudinale d'une face latérale du connecteur 3.

L'ouverture 15 est par exemple ménagée dans la face latérale d'un bras 12 de l'embase du connecteur 3 reliant le balai d'essuyage 2.

Dans le cas où au moins un orifice de projection 8 est ménagé de part et d'autre de l'axe longitudinal L du balai 2, on peut prévoir qu'une ouverture 15 correspondante soit ménagée de chaque côté du connecteur 3, en regard du au moins un orifice de projection 8 de la lame d'essuyage 4 (non représenté).

Dans le cas où la lame d'essuyage est pourvue d'orifices de projection ménagés en quinconce de part et d'autre de l'axe longitudinal L du balai 2, on peut prévoir qu'une unique ouverture 15 soit ménagée dans le connecteur 3 en regard de l'unique orifice de projection 8 de la lame d'essuyage 4 ménagé dans la zone de la lame d'essuyage surmontée par le connecteur 3 (figure 5).

L'agencement en quinconce des orifices de projection 8 permet de ménager une unique ouverture 15, si elle est ménagée au milieu de la dimension longitudinale de la face latérale du connecteur 3.

Selon un premier mode de réalisation représenté sur les figures 1, 2 et 6, l'ouverture 15 présente une forme sensiblement rectangulaire, côté intérieur, contre la lame d'essuyage 4. L'ouverture 15 présente par exemple une longueur DL de l'ordre de 6 millimètres et une largeur Dl de l'ordre de 3 millimètres.

Une portion de paroi 151 de l'ouverture 15, située en bas, du côté de la lèvre 41 de la lame d'essuyage 4, peut être inclinée par rapport à la direction transversale T de la lame d'essuyage, c'est-à-dire par rapport à la direction normale à la lame d'essuyage 4. L'ouverture 15 rectangulaire s'évase ainsi vers le bas.

La portion de paroi 151 inclinée forme par exemple un angle α compris entre 50° et 60° avec la direction transversale T, tel que de l'ordre de 55°.

Dans le cas d'une ouverture de forme sensiblement rectangulaire et en référence à la figure 6, la paroi inclinée 151 s'étend longitudinalement, formant le côté intérieur inférieur de l'ouverture 15.

On peut également prévoir que l'orifice de projection 8 soit formé d'un trou d'axe A incliné par rapport à la direction transversale T.

L'axe du trou A de l'orifice de projection 8 forme par exemple un angle α compris entre 50° et 60° avec la direction transversale T, tel que de l'ordre de 55°.

L'axe du trou A de l'orifice de projection 8 est par exemple sensiblement parallèle à l'inclinaison de la portion de paroi inclinée 151. On évite ainsi le contact du fluide avec la paroi du connecteur.

La figure 6 montre un deuxième exemple de système d'essuyage 1'.

Le système d'essuyage 1' diffère de celui précédemment décrit par la forme ovale de l'ouverture 16.

L'ouverture 16 présente ici une forme sensiblement circulaire, côté intérieur, contre la lame d'essuyage 4.

Une portion de paroi 161 de l'ouverture 16, située en bas, du côté de la lèvre 41 de la lame d'essuyage 4, peut être inclinée par rapport à la direction transversale T de la lame d'essuyage, c'est-à-dire par rapport à la direction normale à l'axe longitudinal L de la lame d'essuyage 4. L'ouverture 16 circulaire s'évase ainsi vers le bas, formant côté extérieur, une forme sensiblement oblongue.

La portion de paroi 161 inclinée forme par exemple un angle α compris entre 50° et 60° avec la direction transversale T, tel que de l'ordre de 55°.

Comme précédemment, on peut également prévoir que l'orifice de projection 8 soit formé d'un trou d'axe A incliné par rapport à la direction transversale T. L'axe du trou A de l'orifice de projection 8 forme par exemple un angle α compris entre 50° et 60° avec la direction transversale T, tel que de l'ordre de 55°. L'axe du trou A de l'orifice de projection 8 est par exemple sensiblement parallèle à l'inclinaison de la portion de paroi inclinée 161.

## Revendications

1. Système d'essuyage (1 ; 1') pour surface vitrée de véhicule comportant :
- un balai d'essuyage (2) ayant une lame d'essuyage (4) pourvue d'au moins un canal (6) dans lequel est destiné à circuler un fluide de lavage (7), ledit canal (6) s'étendant le long de l'axe longitudinal (L) de la lame d'essuyage (4) et débouchant latéralement de la lame d'essuyage (4) par au moins un orifice de projection (8), et
- un connecteur (3 ; 3') relié au balai d'essuyage (2) et destiné à être relié à un bras d'essuyage d'un véhicule,
**caractérisé en ce que** le connecteur (3 ; 3') présente au moins une ouverture (15 ; 16) ménagée en regard d'au moins un orifice de projection (8) de la lame d'essuyage (4).

2. Système d'essuyage selon la revendication précédente, **caractérisé en ce que** l'ouverture (15 ; 16) est ménagée au milieu de la dimension longitudinale d'une face latérale du connecteur (3 ; 3').

3. Système d'essuyage selon l'une des revendications précédentes, **caractérisé en ce que** la lame d'essuyage (4) est pourvue d'orifices de projection (8) ménagés en quinconce de part et d'autre de l'axe longitudinal (L) du balai d'essuyage (2) et **en ce qu'**une unique ouverture (15 ; 16) est ménagée dans le connecteur (3 ; 3') en regard d'un unique orifice de projection (8) de la lame d'essuyage (4) ménagé dans la zone de la lame d'essuyage (4) surmontée par le connecteur (3 ; 3').

4. Système d'essuyage selon l'une des revendications précédentes, **caractérisé en ce que** l'ouverture (15 ; 16) est ménagée dans un bras (12) d'une embase du connecteur (3 ; 3') reliant le balai d'essuyage (2).

5. Système d'essuyage selon l'une des revendications précédentes, **caractérisé en ce qu'**une portion de paroi (151 ; 161) de l'ouverture (15 ; 16), située du côté de la lèvre (41) de la lame d'essuyage (4), est inclinée par rapport à la direction normale (T) à l'axe longitudinal (L) de la lame d'essuyage (4).

6. Système d'essuyage selon la revendication précédente, **caractérisé en ce que** la portion de paroi inclinée (151 ; 161) forme un angle (α) compris entre 50° et 60° avec la direction normale (T) à l'axe longitudinal (L) de la lame d'essuyage (4).

7. Système d'essuyage selon l'une des revendications précédentes, **caractérisé en ce que** l'orifice de projection (8) est formé d'un trou d'axe (A) incliné par rapport à la direction normale (T) à l'axe longitudinal (L) de la lame d'essuyage (4).

8. Système d'essuyage selon la revendication précédente et l'une des revendications 5 ou 6, **caractérisé en ce que** l'axe (A) du trou de l'orifice de projection (8) est sensiblement parallèle à l'inclinaison de la portion de paroi inclinée (151 ; 161).

9. Système d'essuyage selon l'une des revendications précédentes, **caractérisé en ce que** l'ouverture (15 ; 16) présente une forme sensiblement rectangulaire ou ovale ou ronde.

10. Procédé de fabrication d'un système d'essuyage selon l'une des revendications précédentes, **caractérisé en ce qu'**on monte le connecteur (3 ; 3') sur la lame d'essuyage (4), puis on perce des orifices de projection (8) le long de la lame d'essuyage (4), de façon à ce que l'ouverture (15 ; 16) du connecteur (3 ; 3') soit ménagée en regard d'au moins un orifice de projection (8) de la lame d'essuyage (4).

## Patentansprüche

1. Wischersystem (1; 1') für Glasfläche eines Fahrzeuge, umfassend:
- ein Scheibenwischerblatt (2), das eine Wischleiste (4) aufweist, die mit mindestens einem Kanal (6) versehen ist, in dem ein Waschfluid (7) dazu bestimmt ist, zu zirkulieren, wobei sich der Kanal (6) entlang der Längsachse (L) der Wischleiste (4) erstreckt und seitlich von der Wischleiste (4) durch mindestens eine Sprühöffnung (8) mündet, und
- ein Verbindungsstück (3; 3'), das mit dem Scheibenwischerblatt (2) verbunden ist und dazu bestimmt ist, mit einem Wischarm eines Fahrzeugs verbunden zu werden,
**dadurch gekennzeichnet, dass** das Verbindungsstück (3; 3') mindestens eine Öffnung (15; 16) aufweist, die gegenüber von mindestens einer Sprühöffnung (8) der Wischleiste (4) ausgebildet ist.

2. Wischersystem nach dem vorhergehenden Anspruch, **dadurch gekennzeichnet, dass** die Öffnung (15; 16) in der Mitte der Längsabmessung von einer Seitenfläche des Verbindungsstücks (3; 3') angeordnet ist.

3. Wischersystem nach einem der vorhergehenden Ansprüche, **dadurch gekennzeichnet, dass** die Wischleiste (4) mit Sprühöffnungen (8) versehen ist, die auf beiden Seiten der Längsachse (L) des Scheibenwischerblatts (2) versetzt angeordnet sind und dadurch, dass eine einzige Öffnung (15; 16) in dem Verbindungsstück (3; 3') gegenüber von einer einzigen Sprühöffnung (8) der Wischleiste (4) ausgebildet ist, die in dem Bereich der Wischleiste (4) ausgebildet ist, der von dem Verbindungsstück (3; 3') überragt wird.

4. Wischersystem nach einem der vorhergehenden Ansprüche, **dadurch gekennzeichnet, dass** die Öffnung (15; 16) in einem Arm (12) einer Basis des Verbindungsstücks (3; 3') angeordnet ist, das das Scheibenwischerblatt (2) verbindet.

5. Wischersystem nach einem der vorhergehenden Ansprüche, **dadurch gekennzeichnet, dass** ein Wandabschnitt (151; 161) der Öffnung (15; 16), der sich auf der Seite der Lippe (41) der Wischleiste (4) befindet, in Bezug auf die senkrechte Richtung (T) zu der Längsachse (L) der Wischleiste (4) geneigt ist.

6. Wischersystem nach dem vorhergehenden Anspruch, **dadurch gekennzeichnet, dass** der geneigte Wandabschnitt (151; 161) einen Winkel (α), der zwischen 50° und 60° beträgt, mit der senkrechten Richtung (T) zu der Längsachse (L) der Wischleiste (4) bildet.

7. Wischersystem nach einem der vorhergehenden Ansprüche, **dadurch gekennzeichnet, dass** die Sprühöffnung (8) aus einem Achsloch (A) gebildet ist, das in Bezug auf die senkrechte Richtung (T) zu der Längsachse (L) der Wischleiste (4) geneigt ist.

8. Wischersystem nach dem vorhergehenden Anspruch und einem der Ansprüche 5 oder 6, **dadurch gekennzeichnet, dass** die Achse (A) des Lochs der Sprühöffnung (8) im Wesentlichen parallel zu der Neigung des geneigten Wandabschnitts (151; 161) ist.

9. Wischersystem nach einem der vorhergehenden Ansprüche, **dadurch gekennzeichnet, dass** die Öffnung (15; 16) eine im Wesentlichen rechteckige oder ovale oder runde Form aufweist.

10. Verfahren zur Herstellung eines Wischersystems nach einem der vorhergehenden Ansprüche, **dadurch gekennzeichnet, dass** das Verbindungsstück (3; 3') auf der Wischleiste (4) befestigt wird und dann Sprühöffnungen (8) entlang der Wischleiste (4) derart gebohrt werden, dass die Öffnung (15; 16) des Verbindungsstücks (3; 3') gegenüber von mindestens einer Sprühöffnung (8) der Wischleiste (4) ausgebildet ist.

## Claims

1. Wiping system (1; 1') for a glazed vehicle surface comprising:
- a wiper (2) having a wiper blade (4) provided with at least one channel (6) in which a washing fluid (7) is intended to circulate, said channel (6) extending along the longitudinal axis (L) of the wiper blade (4) and emerging laterally from the wiper blade (4) through at least one spraying orifice (8), and
- a connector (3; 3') linked to the wiper (2) and intended to be linked to a wiper arm of a vehicle,
**characterized in that** the connector (3; 3') has at least one opening (15; 16) formed facing at least one spraying orifice (8) of the wiper blade (4).

2. Wiping system according to the preceding claim, **characterized in that** the opening (15; 16) is formed in the middle of the longitudinal dimension of a lateral face of the connector (3; 3').

3. Wiping system according to one of the preceding claims, **characterized in that** the wiper blade (4) is provided with spraying orifices (8) formed in staggered fashion on either side of the longitudinal axis (L) of the wiper (2) and **in that** a single opening (15; 16) is formed in the connector (3; 3') facing a single spraying orifice (8) of the wiper blade (4) formed in the zone of the wiper blade (4) topped by the connector (3; 3').

4. Wiping system according to one of the preceding claims, **characterized in that** the opening (15; 16) is formed in an arm (12) of a base of the connector (3; 3') linking the wiper (2).

5. Wiping system according to one of the preceding claims, **characterized in that** a portion of wall (151; 161) of the opening (15; 16), situated on the side of the lip (41) of the wiper blade (4), is inclined in relation to the direction (T) normal to the longitudinal axis (L) of the wiper blade (4).

6. Wiping system according to the preceding claim, **characterized in that** the inclined wall portion (151; 161) forms an angle (α) of between 50° and 60° with the direction (T) normal to the longitudinal axis (L) of the wiper blade (4).

7. Wiping system according to one of the preceding claims, **characterized in that** the spraying orifice (8) is formed by a hole of axis (A) inclined in relation to the direction (T) normal to the longitudinal axis (L) of the wiper blade (4).

8. Wiping system according to the preceding claim and one of Claims 5 and 6 **characterized in that** the axis (A) of the hole of the spraying orifice (8) is substantially parallel to the inclination of the inclined wall portion (151; 161).

9. Wiping system according to one of the preceding claims, **characterized in that** the opening (15; 16) has a substantially rectangular or oval or round form.

10. Method for manufacturing a wiping system according to one of the preceding claims, **characterized in that** the connector (3; 3') is mounted on the wiper blade (4), then spraying orifices (8) are drilled along the wiper blade (4), so that the opening (15; 16) of the connector (3; 3') is formed facing at least one spraying orifice (8) of the wiper blade (4).
